# EUROPEAN PATENT APPLICATION

(11) **EP 2 525 204 A1**
(43) Date of publication of application: **21.11.2012**
(21) Application number: 10843205.5
(22) Date of filing: 28.12.2010
(51) Int. Cl.: G01M 3/04, F28F 27/00

(54) **METHOD FOR DETECTING ABNORMALITY IN HEAT-EXCHANGE PROCESS, AND HEAT EXCHANGER**

(30) Priority: 13.01.2010 JP 2010004813
(71) Applicant: Sumitomo Chemical Company, Limited, Tokyo 104-8260 (JP)
(72) Inventor: MARUNO, Shinobu, Niihama-shi Ehime 792-0025 (JP); ETO, Isao, Niihama-shi Ehime 792-0025 (JP)
(74) Representative: Jackson, Martin Peter
(86) International application number: PCT/JP2010/073712
(87) International publication number: WO 2011/086853

(57) **Abstract**

A method of sensing an abnormal condition in a heat exchange process, capable of promptly and readily sensing leakage of a heat medium into a process fluid flow path in a process of heat exchange, is provided. The present invention is directed to a method of sensing an abnormal condition in a heat exchange process between the heat medium and the process fluid having a sensing step of sensing a gas component generated as a result of decomposition of a heat medium and/or a gas component generated as a result of contact between the heat medium and the process fluid, in a vapor phase portion in a flow path for the process fluid. The method is preferably applied in a heat exchange process where the heat medium is fused salt including nitrate and/or nitrite and the process fluid includes secondary alcohols or a dehydrated product thereof.

## Description

### TECHNICAL FIELD

The present invention relates to a method of sensing an abnormal condition in a process of heat exchange between a heat medium and a process fluid and a heat exchange apparatus of which abnormal condition is sensed with the method of sensing an abnormal condition.

### BACKGROUND ART

In a heat exchange process, fused salt, water, or the like is employed as a heat medium, and a temperature of a process fluid is adjusted to a prescribed temperature as a result of heat exchange between this heat medium and the process fluid. For example, fused salt which is a mixture such as sodium nitrite and potassium nitrate has such properties as (1) excellent heat conduction capability, (2) high chemical stability even at a high temperature, and (3) ease in temperature control. Therefore, fused salt has been used as a high temperature heat medium for heating or cooling various process fluids.

During the heat exchange process, a process fluid or a heat medium may leak due to corrosion or the like of a pipe and a method of sensing leakage of a fluid has been studied. For example, Japanese Patent Laying-Open No. 2003-82833 (PTL 1) has proposed a method of sensing a gas component (nitrogen oxide) generated at the time when a leaked process fluid reacts to a heat medium, in a vapor phase portion in a flow path for the heat medium.

### CITATION LIST

### PATENT LITERATURE

PTL 1: Japanese Patent Laying-Open No. 2003-83833

### SUMMARY OF INVENTION

### TECHNICAL PROBLEM

With the method described in PTL 1, however, leakage of a heat medium into a process fluid flow path cannot be sensed, and there has been a possibility of occurrence of a secondary disaster such as explosion.

It is an object of the present invention is to provide a method of sensing an abnormal condition in a heat exchange process, capable of promptly sensing leakage of a heat medium into a flow path for a process fluid. In addition, it is also an object to provide a heat exchange apparatus of which abnormal condition is sensed with such a method of sensing an abnormal condition.

### SOLUTION TO PROBLEM

The present invention provides a method of sensing an abnormal condition in a heat exchange process for heat exchange between a heat medium and a process fluid, having a sensing step of sensing a gas component generated as a result of decomposition of the heat medium and/or a gas component generated as a result of contact between the heat medium and the process fluid, in a vapor phase portion in a flow path for the process fluid. In the sensing step, leakage of a heat medium into a process fluid flow path can promptly and readily be sensed.

The method of sensing an abnormal condition according to the present invention described above is preferably used in a heat exchange process, in which the heat medium is fused salt including nitrate and/or nitrite and the process fluid contains secondary alcohols and/or a dehydrated product thereof. In this case, the gas component sensed in the sensing step includes, for example, at least one of nitrogen oxide (NOₓ), carbon monoxide (CO), carbon dioxide (CO₂), and hydrogen (H₂).

The method of sensing an abnormal condition according to the present invention described above is further preferably used in a heat exchange process, in which the heat medium is fused salt including nitrate and 20 to 90 weight % of nitrite and having a melting point from 100 to 200°C. Namely, in the case where the heat medium is the fused salt including nitrite such as sodium nitrite (NaNO₂), since at least one of nitrogen oxide, carbon monoxide, carbon dioxide, and hydrogen is generated as a result of reaction between this heat medium and the process fluid, leakage of the process fluid can promptly be sensed by sensing this gas.

In addition, the present invention provides a heat exchange apparatus including a process fluid flow path through which a process fluid flows, a heat medium flow path through which a heat medium flows, a heat exchanger for heat exchange between the heat medium and the process fluid, and a gas sensor for sensing a gas component generated as a result of decomposition of the heat medium and/or a gas component generated as a result of contact between the heat medium and the process fluid, the gas sensor being provided in a vapor phase portion in the process fluid flow path.

It is noted that the "heat exchange process" in the present invention is a concept encompassing also a dehydration process of secondary alcohols.

### ADVANTAGEOUS EFFECTS OF INVENTION

According to the method of sensing an abnormal condition in a heat exchange process or the heat exchange apparatus in the present invention, in a heat exchange process for heat exchange between a heat medium and a process fluid, leakage of a heat medium can promptly and readily be sensed by sensing a gas component generated as a result of decomposition of the heat medium and/or a gas component generated as a result of contact between the heat medium and the process fluid, in a vapor phase portion in a flow path for the process fluid.

### BRIEF DESCRIPTION OF DRAWINGS

Fig. 1 is a schematic diagram showing one embodiment of a heat exchange apparatus according to the present invention.
Fig. 2 is a schematic diagram showing a test apparatus used in a verification test according to the present invention.

### DESCRIPTION OF EMBODIMENTS

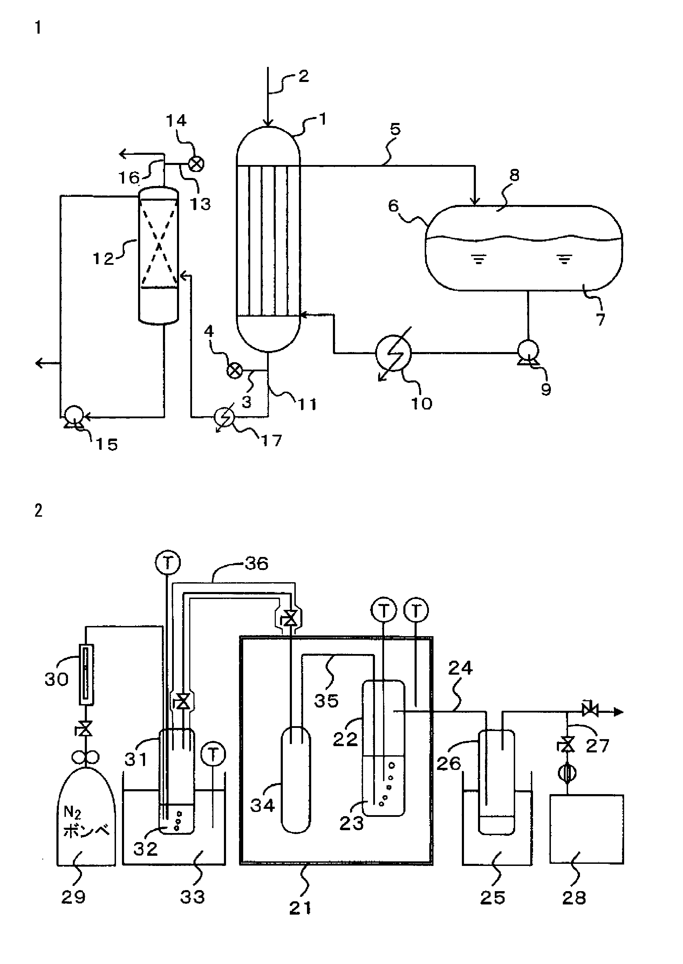

The present invention will be described hereinafter in detail with reference to the drawings. Fig. 1 is a schematic diagram showing one embodiment of a heat exchange apparatus according to the present invention. In the heat exchange apparatus shown in Fig. 1, an abnormal condition of leakage of a heat medium is sensed with the method of sensing an abnormal condition according to the present invention.

The heat exchange apparatus shown in Fig. 1 includes a process fluid flow path through which a process fluid flows, a heat medium flow path through which a heat medium flows, a heat exchanger 1 for heat exchange between the heat medium and the process fluid, and a gas sensor 4 for sensing a gas component generated as a result of decomposition of the heat medium and/or a gas component generated as a result of contact between the heat medium and the process fluid.

The process fluid is supplied to heat exchanger 1 through a pipe 2. In the present embodiment, the process fluid flow path means a flow path from a conduit in heat exchanger 1 to an absorption tower 12 through which a process fluid flows and a flow path branched therefrom (for example, a circulating path, a vent line). Therefore, the process fluid flow path includes heat exchanger 1 and absorption tower 12, as well as pipes 11, 3 therebetween, a cooler 17, and a vent line 16 of absorption tower 12. A fluid flow path subsequent to absorption tower 12 is not included. The gas sensor should only be provided in a vapor phase portion in the process fluid flow path. In the present embodiment, gas sensor 4 is provided in pipe 3 branched from pipe 11 connecting heat exchanger 1 and absorption tower 12 to each other. Gas sensor 4 can also be provided in vent line 16 of absorption tower 12. In the present embodiment, an NOₓ sensor 14 is further provided in a pipe 13 branched from vent line 16 of absorption tower 12.

In the present embodiment, the heat medium flow path means a flow path including heat exchanger 1, a pipe 5, a heat medium tank 6, a pump 9, and a cooler and heater 10, and a flow path branched therefrom (for example, a circulating path, a vent line).

In the heat exchange apparatus shown in Fig. 1, gas sensor 4 or NOₓ sensor 14 senses a decomposed gas component of the heat medium which leaked into the process fluid flow path in heat exchanger 1 and/or a gas component generated as a result of contact of the heat medium which leaked into the process fluid flow path with the process fluid.

Heat exchanger 1 is not particularly limited so long as heat exchange between a process fluid and a heat medium is achieved with a partition wall such as a pipe or a flat plate being interposed, and for example, a shell-and-tube cylindrical heat exchanger, a plate-type heat exchanger, a spiral heat exchanger, a block heat exchanger, or the like representing a bulkhead heat exchanger can be employed. The heat exchanger includes not only a heat exchanger simply for heat exchange but also a reactor such as a multi-tubular catalytic packed reactor for heat exchange and reaction.

Preferably, fused salt, water, or the like is employed as the heat medium. As this fused salt, a composition containing 20 to 90 weight % of sodium nitrite (NaNO₂) having a melting point in a range approximately from 100 to 200°C is preferred. In the case where a composition composed of NaNO₂, sodium nitrate (NaNO₃), and potassium nitrate (KNO₃) is employed as fused salt, fused salt containing these components in ranges from 20 to 50 weight %, from 5 to 15 weight %, and from 45 to 65 weight %, respectively, is more preferred. Alternatively, in the case where a composition composed of NaNO₂ and KNO₃ is employed as fused salt, fused salt containing these components in ranges from 20 to 90 weight % and from 80 to 10 weight %, respectively, is more preferred. Specifically, for example, a composition composed of NaNO₂ (40 weight %), NaNO₃ (7 weight %), and KNO₃ (53 weight %) (having a melting point of 142°C), a composition composed of NaNO₂ (34 weight %), NaNO₃ (13 weight %), and KNO₃ (53 weight %) (having a melting point of 152°C), a composition composed of NaNO₂ (50 weight %) and KNO₃ (50 weight %) (having a melting point of 139°C), and the like are exemplified. In order to lower a freezing point of these fused salts and facilitate temperature control, water may be added for use.

The process fluid is not particularly limited so long as a process fluid can generate a gas as a result of contact with a heat medium when the heat medium flows into the process fluid flow path and that gas can be sensed in the vapor phase portion in the process fluid flow path. For example, a property of the process fluid may be any of a solid, a liquid, and a gas, however, a gas is desirable.

In the case where fused salt is employed as the heat medium, for example, a process fluid including various secondary alcohols and/or a dehydrated product thereof is preferred as the process fluid. Specifically, for example, a process fluid including methylcyclohexyl carbinol (MCC) representing a secondary alcohol or cyclohexyl ethylene (CHE) representing a dehydrated product thereof, and the like are exemplified. In addition, as the process fluid, for example, a process fluid including 4-methyl-2-pentanol representing a secondary alcohol or 4-methyl-2-pentene representing a dehydrated product thereof, and the like are exemplified. When these process fluids and fused salt come in contact with each other, NOₓ, CO, CO₂, H₂, or the like is generated.

A dehydration process (one type of a heat exchange process) in which fused salt is employed as the heat medium, MCC is employed as the process fluid, and CHE is generated by dehydrating this MCC will be described hereinafter in detail.

Namely, MCC is introduced in heat exchanger 1 (reactor) through pipe 2, heat exchange between MCC and fused salt approximately from 300 to 400°C is carried out in heat exchanger 1, CHE is generated from MCC as a result of dehydration through vapor phase reaction, and CHE is sent through pipe 11 and cooler 17 to absorption tower 12. A CHE solution that entered absorption tower 12 is circulated by a pump 15, and a part thereof is used as an absorbing solution and a part thereof is guided to downstream of a process.

Fused salt that has completed heat exchange with the process fluid is discharged from heat exchanger 1 and sent to heat medium tank 6 through pipe 5. A prescribed amount of fused salt is stored in this heat medium tank 6, and heat medium tank 6 is constituted of a liquid phase portion 7 (fused salt) and a vapor phase portion 8. Fused salt in liquid phase portion 7 is sent by pump 9 to cooler and heater 10 for heating and/or cooling this fused salt, cooled or heated, and thereafter again supplied to heat exchanger 1.

Since the aforementioned dehydration process of the secondary alcohols is generally performed substantially at an atmospheric pressure, the process fluid flow path is maintained at a pressure lower than that in the heat medium flow path. Therefore, when a crack or the like is produced due to stress or corrosion in the process fluid flow path (partition wall) in heat exchanger 1 during the dehydration process, fused salt leaks into the process fluid flow path and reacts to the process fluid, and hence NOₓ, CO, CO₂, H₂, or the like is generated. Furthermore, a gas component (NOₓ or the like) generated as a result of thermal decomposition of fused salt may also flow into the process fluid flow path.

By having the sensing step of sensing these gas components with gas sensor 4 or NOₓ sensor 14, leakage of the heat medium is sensed in an early stage. Thus, an interlock can be activated so that supply of the process fluid and fused salt into heat exchanger 1 is stopped and damage can be prevented from expanding.

As gas sensor 4, a controlled-potential electrolysis type or infrared type NOₓ sensor, an infrared absorption type CO/CO₂ sensor, a contact combustion type hydrogen sensor, and the like can be employed. Specifically, a controlled-potential electrolysis type NOₓ meter manufactured by New Cosmos Electric Co., Ltd., an infrared type gas analyzer manufactured by Yokogawa Electric Corporation, a contact combustion type hydrogen sensor manufactured by New Cosmos Electric Co., Ltd., and the like are exemplified.

### Example

A verification test for verifying that the method of sensing an abnormal condition according to the present invention is effective was conducted in the following.

Fig. 2 shows a schematic diagram of an overall test apparatus used in the verification test. With the use of this test apparatus, a gas generated at the time when fused salt containing NaNO₂ and a process fluid containing MCC or CHE were mixed was evaluated.

In the test apparatus shown in Fig. 2, a thermostatic bath 21 contains a stainless steel vessel 22 for evaluating risk of mixture of fused salt and an introduced gas, fused salt 23 placed in stainless steel vessel 22, a supply pipe 35 for supplying an introduced gas including an MCC gas or a CHE gas to fused salt 23 within vessel 22, and a fused salt collection vessel 34 for preventing fused salt 23 from flowing back to upstream of the apparatus. A pipe 24 for collecting an exhaust gas is attached to stainless steel vessel 22. The exhaust gas is cooled in a glass vessel 26 immersed in a cooler 25 and a part thereof is collected in a fluoroplastic sampling bag 28 through a pipe 27.

The introduced gas is prepared by bubbling an N₂ gas supplied from an N₂ cylinder 29 into a glass vessel 31 containing a process fluid 32 (MCC or CHE) heated in an oil bath 33. In addition, by heating a pipe between glass vessel 31 and fused salt collection vessel 34 to a temperature not lower than a boiling point of MCC or CHE by using a ribbon heater 36, the introduced gas can be prevented from condensing in the pipe. A flow rate of a gas from N₂ cylinder 29 is adjusted by a gas flowmeter 30. It is noted that T represents a temperature sensor in Fig. 2.

Tests 1 to 6 were conducted in the following procedures by using the test apparatus as above. It is noted that, in Tests 1, 3, and 5, the following procedure (1) was not performed but the test started from a procedure (2).
(1) Ten grams of fused salt (NaNO₂: 40 weight %, NaNO₃: 7 weight %, KNO₃: 53 weight %) were loaded in 150 ml stainless steel vessel 22.
(2) Stainless steel vessel 22 was placed in thermostatic bath 21 and heated to an isothermal temperature of 380°C.
(3) After fused salt reached a prescribed temperature, a line from N₂ cylinder 29 to pipe 27 through which an exhaust gas passed was substituted with a nitrogen gas.
(4) A gas mixture of MCC and nitrogen (Tests 3, 4), a gas mixture of CHE and nitrogen (Tests 5, 6), or nitrogen alone (Tests 1, 2) was supplied to stainless steel vessel 22 at a flow rate of approximately 2000 mL/min.
(5) A gas generated as a result of supply of the gas mixture of MCC and nitrogen, the gas mixture of CHE and nitrogen, or nitrogen alone was collected in fluoroplastic sampling bag 28 for a prescribed period of time.
(6) Of the collected exhaust gas, NOₓ was measured with ion chromatography and other gases were measured with gas chromatography, and volumetric composition of the exhaust gas was examined. Table 1 shows test results.

**Table 1**

| | Amount of Loaded Fused Salt [g] | Type of Fed Gas | Composition of Exhaust Gas [Vol %] | | | |
|---|---|---|---|---|---|---|
| | | | H₂ | CO | CO₂ | NOₓ |
| Test 1 | 0 | Nitrogen | <0.1 | 0.0009 | 0.043 | 0.0033 |
| Test 2 | 10 | Nitrogen | <0.1 | 0.0003 | 0.034 | 0.019 |
| Test 3 | 0 | Nitrogen, MCC | 0.3 | 0.0046 | 0.05 | 0.010 |
| Test 4 | 10 | Nitrogen, MCC | 1.4 | 0.032 | 0.36 | 0.044 |
| Test 5 | 0 | Nitrogen, CHE | 5.3 | 0.036 | 0.37 | 0.0010 |
| Test 6 | 10 | Nitrogen, CHE | 13.7 | 0.028 | 0.20 | 0.024 |

As shown in Table 1, it was found from Test 1 conducted for comparison (where no fused salt was loaded but nitrogen alone was fed) that H₂, CO, CO₂, and NOₓ could be regarded as not existing in the test apparatus. It was found that, in Test 2, fused salt was heated to 380°C in stainless steel vessel 22, increase in NOₓ was observed as compared with Test 1, and hence fused salt locally decomposed at that temperature. In Test 3, MCC was heated to 380°C in stainless steel vessel 22, and H₂, CO, and NOₓ increased as compared with Test 1. Therefore, it was found that, under such conditions, MCC locally decomposed.

In Test 4, heating to 380°C was carried out while MCC and fused salt were in contact with each other in stainless steel vessel 22, and as compared with Tests 2, 3, H₂, CO, CO₂, and NOₓ gases increased. It was found from this result that H₂, CO, CO₂, and NOₓ were effective as a gas to be sensed, for sensing contact of fused salt containing NaNO₂ with a process fluid containing MCC. In Test 5, CHE was heated to 380°C in stainless steel vessel 22, and as compared with Test 1, H₂, CO, and CO₂ increased. Therefore, it was found that, under such conditions, CHE locally decomposed. In Test 6, heating to 380°C was carried out while CHE and fused salt were in contact with each other in stainless steel vessel 22, and as compared with Tests 2, 5, H₂ and NOₓ increased. It was found from this result that H₂ and NOₓ were effective as a gas to be sensed, for sensing contact of fused salt containing NaNO₂ with a process fluid containing CHE.

### REFERENCE SIGNS LIST

1 heat exchanger; 2 pipe; 3 pipe; 4 gas sensor; 5 pipe; 6 heat medium tank; 7 liquid phase portion; 8 vapor phase portion; 9 pump; 10 cooler and heater; 11 pipe; 12 absorption tower; 13 pipe; 14 NOₓ sensor; 15 pump; 16 vent line; 17 cooler; 21 thermostatic bath; 22 stainless steel vessel; 23 fused salt; 24 pipe; 25 cooler; 26 glass vessel; 27 pipe; 28 fluoroplastic sampling bag; 29 N₂ cylinder; 30 gas flowmeter; 31 glass vessel; 32 process fluid (MCC or CHE); 33 oil bath; 34 fused salt collection vessel; 35 supply pipe; and 36 ribbon heater.

## Claims

1. A method of sensing an abnormal condition in a heat exchange process for heat exchange between a heat medium and a process fluid, comprising:
a sensing step of sensing a gas component generated as a result of decomposition of said heat medium and/or a gas component generated as a result of contact between said heat medium and said process fluid, in a vapor phase portion in a flow path for said process fluid.

2. The method of sensing an abnormal condition in a heat exchange process according to claim 1, wherein
said heat medium is fused salt including nitrate and/or nitrite,
said process fluid contains secondary alcohols and/or a dehydrated product thereof, and
said gas component sensed in said sensing step includes at least one of nitrogen oxide, carbon monoxide, carbon dioxide, and hydrogen.

3. The method of sensing an abnormal condition in a heat exchange process according to claim 2, wherein
said fused salt includes said nitrate and 20 to 90 weight % of said nitrite and has a melting point from 100 to 200°C.

4. A heat exchange apparatus, comprising:
a process fluid flow path through which a process fluid flows;
a heat medium flow path through which a heat medium flows;
a heat exchanger for heat exchange between said heat medium and said process fluid; and
a gas sensor for sensing a gas component generated as a result of decomposition of said heat medium and/or a gas component generated as a result of contact between said heat medium and said process fluid,
said gas sensor being provided in a vapor phase portion in said process fluid flow path.
